# EUROPEAN PATENT APPLICATION

(11) **EP 4 280 350 A1**
(43) Date of publication of application: **22.11.2023**
(21) Application number: 23174291.7
(22) Date of filing: 19.05.2023
(51) Int. Cl.: H01M 10/653, H01M 50/213, H01M 50/291, H01M 50/293

(54) **BATTERY SUPPORT AND BATTERY ASSEMBLY**

(30) Priority: 20.05.2022 CN 202210556989
(71) Applicant: Techtronic Cordless GP, Anderson, SC 29621 (US)
(72) Inventor: LEE, Hei Man, Kwai Chung (HK); WANG, Nan, Dongguan City (CN); Li Feng, WANG, Dongguan City (CN)
(74) Representative: Novagraaf Group

(57) **Abstract**

The present invention provides a battery support, and a battery assembly comprising the battery support. The battery support is used to retain a battery assembly having multiple cells; a heat dissipating means of the battery support comprises at least one spacer component, the spacer component has multiple accommodating recesses on at least one side, the accommodating recess is partially shape-fitted to a circumferential sidewall of the cell, and the spacer component is made of a material with a thermal conductivity greater than that of air. The heat dissipating means of the battery support of the present invention is fitted to outer walls of the cells over as large an area as possible, and the heat dissipating means is able to undergo heat exchange with the cells in the process of use of the battery assembly and thus promote heat dissipation from the cells, in order to maintain the efficiency of use and the service life of the battery assembly.

## Description

### Technical field

The present invention relates to the field of batteries, in particular to a battery support. The present invention also relates to a battery assembly.

### Background art

In battery assemblies commonly seen on the market today, the cells are generally fixed by retaining components at the top and bottom thereof, and there are gaps between adjacent cells, with no filling material in the gaps. When the battery is being used, heat dissipation from the cells mainly relies on air circulation around the cells. However, the thermal conductivities of the retaining components and air are not high, so during use, the battery experiences the problem of impaired efficiency of use due to cell overheating.

Thus, there is a need to provide a battery support and a battery assembly having same, in order to at least partially solve the abovementioned problem.

### Summary of the invention

An objective of the present invention is to provide a battery support, and a battery assembly having the battery support. The battery support comprises a heat dissipating means; the heat dissipating means is at least partially arranged between adjacent cells and fitted to outer walls of the cells over as large an area as possible, and the heat dissipating means is able to undergo heat exchange with the cells in the process of use of the battery assembly and thus promote heat dissipation from the cells, in order to maintain the efficiency of use and the service life of the battery assembly.

According to one aspect of the present invention, a battery support is provided, for a battery assembly having multiple cells arranged in parallel axially, characterized in that the battery support comprises retaining components located at the top and bottom of the cells, and a heat dissipating means therebetween, the heat dissipating means comprising multiple independent spacer components, the spacer component having multiple accommodating recesses on at least one side, the accommodating recess being partially shape-fitted to a circumferential sidewall of the cell, the spacer component being made of a flexible material with a thermal conductivity greater than that of air, the retaining component restricting movement of the cell in an axial direction of the cell, and the heat dissipating means restricting movement of the cell perpendicular to the axial direction of the cell.

In one embodiment, the spacer components are arranged abreast in such a way as to be separable from each other, and the accommodating recesses are positioned opposite each other between adjacent said spacer components to form an accommodating cavity, the accommodating cavity being able to accommodate the cell in a shape-matched manner.

In one embodiment, accommodating recesses partially shape-adapted to the sidewall of the cell are provided on two sides in a transverse direction of each said spacer component, the accommodating recesses on the two sides in the transverse direction of each said spacer component being staggered in a longitudinal direction.

In one embodiment, the accommodating cavity defined by adjacent spacer components is cylindrical.

In one embodiment, the heat dissipating means further comprises an end component, which is located at an outer side in the transverse direction of all of the spacer components so as to be arranged abreast of the spacer components, the end component having multiple accommodating recesses, the accommodating recesses of the end component facing the accommodating recesses of the adjacent spacer component to form accommodating cavities, which accommodate the cells in a partially shape-adapted manner.

In one embodiment, the spacer component and the end component are made of EPDM, and preferably, a metal plate such as a copper plate is integrally moulded on at least a portion of the multiple spacer components.

In one embodiment, the metal plate extends in one piece in the longitudinal direction in the spacer component, and preferably, the metal plate is disposed close to the accommodating recesses and shape-adapted to the accommodating recesses.

In one embodiment, the height of the heat dissipating means is more than half the height of the cell, the heat dissipating means preferably extends over the entire height of the cell, and a weight reduction hole is optionally provided on the heat dissipating means.

In one embodiment, the spacer component is a rotationally symmetric structure.

In one embodiment, the accommodating recesses are distributed uniformly in the longitudinal direction, and the spacing between adjacent accommodating recesses is smaller than the diameter of the accommodating cavity.

In one embodiment, the thickness of any part of the spacer component is smaller than the diameter of the accommodating cavity.

In one embodiment, the retaining components at the top and bottom are connected to each other, and the heat dissipating means is clamped therebetween.

In one embodiment, the heat dissipating means is in direct contact with a housing of the battery assembly.

According to another aspect of the present invention, a battery assembly is provided, comprising:
multiple cells;
the battery support according to any one of the above embodiments, the cells being accommodated in the accommodating cavities formed by the spacer components of the heat dissipating means.

### Brief description of the drawings

To better understand the above and other objectives, features, advantages and functions of the present invention, the preferred embodiments shown in the drawings may be referred to. In the drawings, identical reference labels denote identical components. Those skilled in the art should understand that the drawings are intended to illustrate preferred embodiments of the present invention schematically, and have no limiting effect on the scope of the present invention, and the various components in the drawings are not drawn to scale.
Fig. 1 is a schematic drawing of a battery assembly according to some preferred embodiments of the present invention.
Fig. 2 is a schematic drawing of the internal structure of the battery assembly in Fig. 1; in Fig. 2, structures such as an outer housing of the battery assembly and a top retaining component of the cells have been removed.
Fig. 3 is a schematic drawing with some of the collector components in Fig. 2 removed to reveal the cells.
Fig. 4 is a schematic drawing with other structures in Fig. 3 removed and only the heat dissipating means and the cells retained.
Fig. 5 is a schematic drawing of Fig. 4 viewed from above.
Fig. 6 is a 3D schematic drawing of Fig. 4 viewed from another angle, with some of the cells removed.
Fig. 7 is a schematic drawing of a pair of adjacent spacer components in Fig. 6.
Fig. 8A is an individual schematic drawing of a main body of one of the spacer components in Fig. 7.
Fig. 8B is an individual schematic drawing of a metal plate embedded in one of the spacer components in Fig. 7.
Fig. 9 is a schematic drawing of the internal structure of a battery assembly according to some other preferred embodiments of the present invention.
Fig. 10 is a combined schematic drawing of the top retaining component, heat dissipating means and cells in Fig. 9.
Fig. 11 is an individual schematic drawing of one of the spacer components in Fig. 10.

Key to drawings:
100 - battery assembly
101 - casing
102 - handle part
103 - window
10, 620 - retaining component
20, 670 - heat dissipating means
21, 211, 212 - spacer component
211a, 211b, 212a, 212b - accommodating recess
22 - end component
20a - accommodating cavity
20b - top surface of heat dissipating means
20c - bottom surface of heat dissipating means
213 - metal plate
213a, 213b - recess of metal plate
23 - gap
30 - cell
31, 32, 33, 34 - cell string
40 - collector component
50 - fixing/retaining plate
640 - circuit transmission plate
670a, 670b - heat dissipating hole

### Detailed description of the invention

Particular embodiments of the present invention are now described in detail with reference to the drawings. The embodiments described here are merely preferred embodiments of the present invention. Based on these preferred embodiments, those skilled in the art will be able to think of other ways in which the present invention could be implemented, all of which likewise fall within the scope of the present invention.

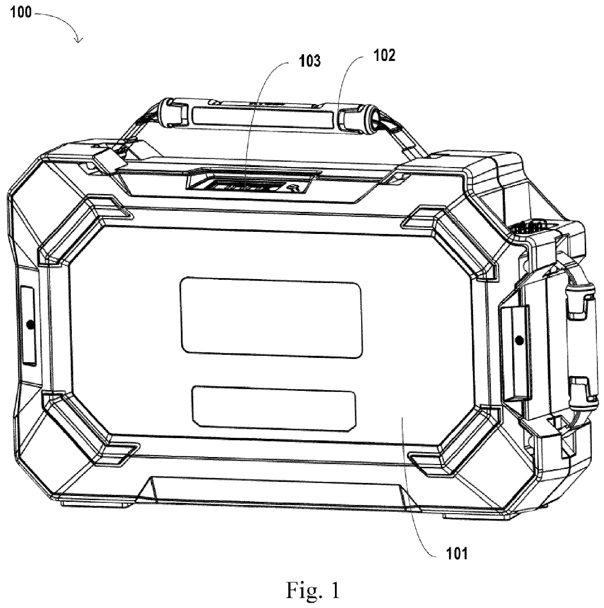

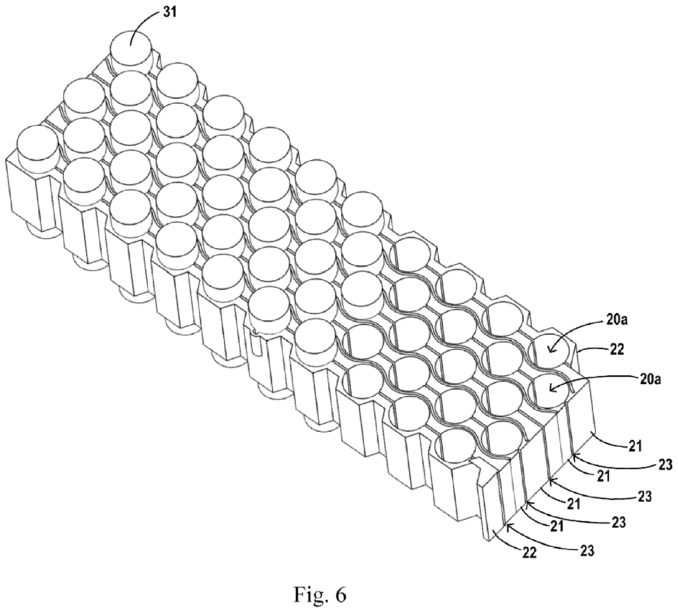

Figs. 1-11 show some preferred embodiments of a battery support according to the present invention, a battery assembly having the battery support, a work machine in which the battery assembly might be used, etc. It must first be explained that directional and positional terms in the present invention should be understood as meaning relative directions and positions rather than absolute directions and positions. The directional and positional terms in the present invention may be explained with reference to the exemplary structures shown in Figs. 1 - 11. For example, the height direction of the cell as mentioned in the present invention may be understood to be direction D2 in Figs. 1 - 11, the "longitudinal direction" may be understood to be direction D1 in Figs. 1 - 11, and the "transverse direction" may be understood to be direction D3 in Figs. 1 - 11, wherein directions D1, D2 and D3 are orthogonal in space. The top and bottom of the cell as mentioned in the present invention may be understood to be the two ends in the height direction of the cell.

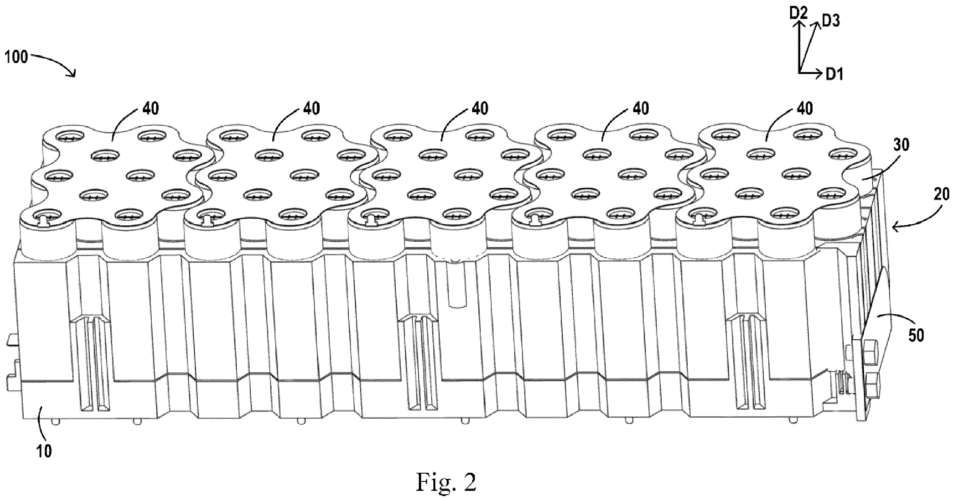

Fig. 1 shows a schematic drawing of the exterior of a battery assembly in some embodiments. The battery assembly 100 comprises a casing 101 which is substantially a cuboid, and may also for example comprise a handle part 102 and a window 103 for displaying a remaining charge level. The interior of the casing 101 of the battery assembly 100 may have a variety of different structures; Figs. 2-8 show an internal structure of the battery assembly 100 according to a first preferred embodiment of the present invention.

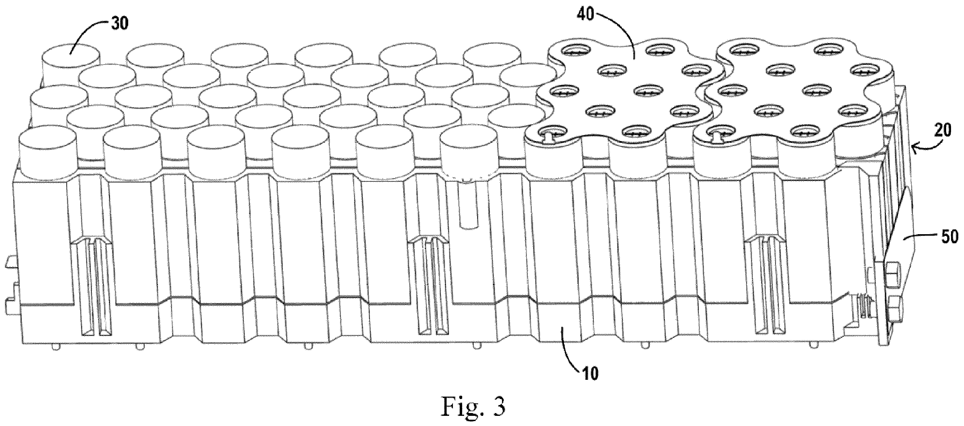

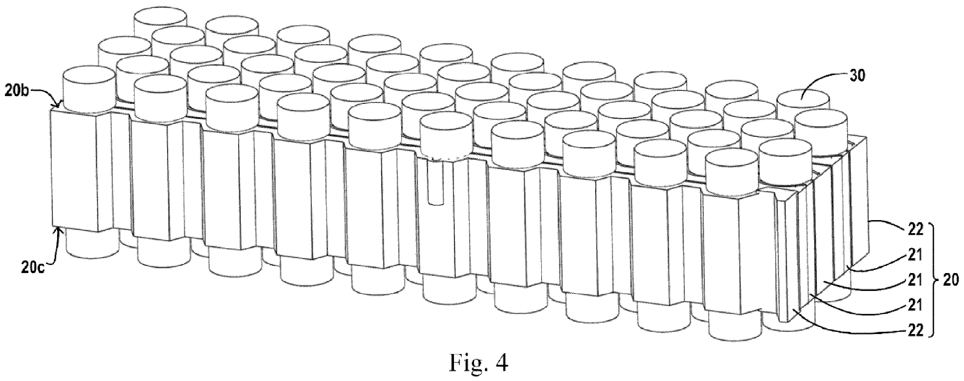

First referring to Figs. 2 and 3, the battery assembly 100 may comprise multiple cells 30 arranged in parallel axially, with collector components 40 provided on the top and bottom of the cells 30. The battery assembly 100 further comprises a battery support; the battery support comprises retaining components located at the top and bottom of the multiple cells 30, and a heat dissipating means 20 between the retaining components. The retaining components are used to fix the multiple cells 30 in an axial direction of the cells. The heat dissipating means is in tight contact with the cells in the circumferential direction of the cells, and can restrict movement of the cells perpendicular to the axial direction, e.g. can restrict transverse movement of the cells. A retaining component 10 at the bottom of the cells 30 is shown in Fig. 2, but the retaining component at the top of the cells 30 has been removed, thus revealing the collector components 40 at the top of the multiple cells 30; in Fig. 3, some of the collector components 40 at the top of the cells 30 have been removed. A fixing/retaining plate 50 is further provided at a longitudinal end of the cells 30. The combined structure of the cells 30 and the heat dissipating means 20 is shown in Figs. 4-6.

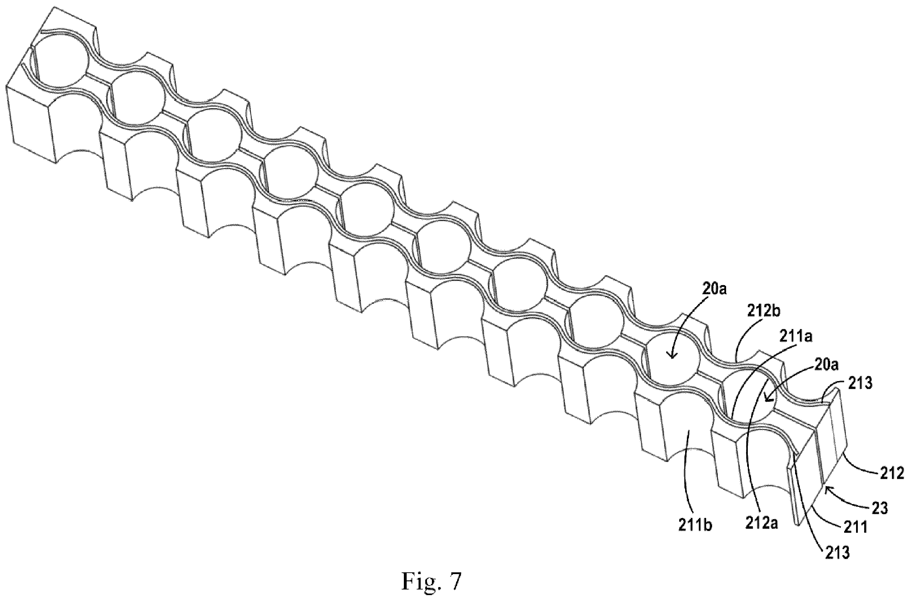

Referring to Figs. 4-6, the heat dissipating means may comprise multiple spacer components 21, each spacer component 21 having multiple accommodating recesses on at least one side (e.g. accommodating recesses 211a, 211b, 212a, 212b as shown in Fig. 7). The accommodating recess is partially shape-fitted to a circumferential sidewall of the cell 30. Specifically, each spacer component 21 is located between adjacent cells 30, and fitted in a shape-adapted manner to outside walls of the shape-adapted adjacent cells 30. The spacer component 21 is for example made of a flexible material with a thermal conductivity greater than that of air.

The multiple spacer components 21 are arranged abreast in such a way as to be separable from each other, and there may be a gap 23 between adjacent spacer components 21. Optionally, adjacent spacer components 21 are in contact with each other, without a gap. Accommodating recesses are positioned opposite each other between adjacent said spacer components to form an accommodating cavity 20a; the accommodating cavity 20a is able to accommodate the cell 30 in a shape-matched manner. In this embodiment, the multiple cells 30 form multiple cell strings, each cell string being lined up in the longitudinal direction D1, and the multiple cell strings being arranged in the transverse direction D3. Correspondingly, each spacer component 21 extends between two adjacent cell strings in substantially the longitudinal direction D1, the multiple spacer components 21 being arranged in the transverse direction D3. One advantage of using multiple independent spacer components is that the spacer components can be adapted to cells of different sizes. In actual applications, for the same type of cell, cells produced by different manufacturers will differ in size somewhat. This presents a challenge for a moulded, one-piece cell support, because differences in cell size might result in looseness or over-tightness. Through the use of multiple independent spacer components, the present invention can solve such technical problems very well, and there will be no looseness or over-tightness.

It must be explained that the term "cell string" mentioned in the present invention refers to cells arranged in a column in space, and this column of cells does not necessarily have a specific circuit connection relationship. For example, in some embodiments, all of the cells in one cell string may be connected in series; in some embodiments, cells in one cell string may respectively belong to multiple different parallel-connected circuits.

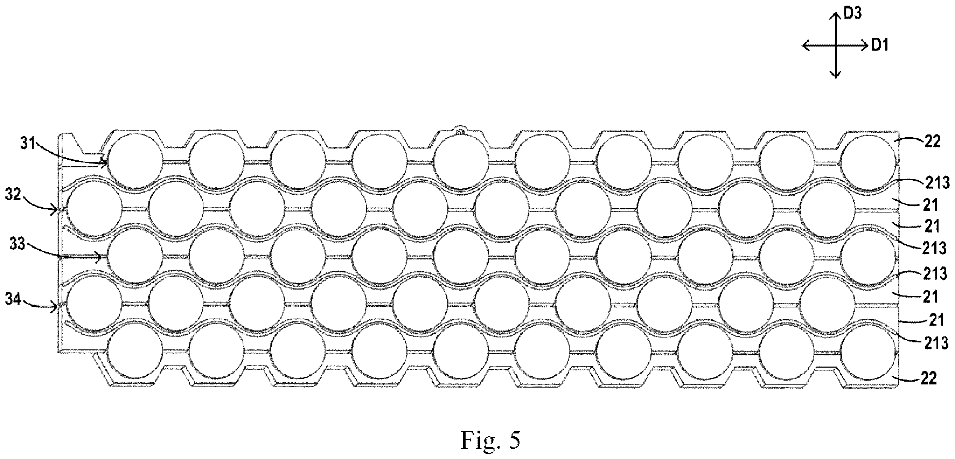

In this embodiment, referring to Figs. 4 and 5, the cells 30 of adjacent cell strings are offset in the transverse direction D3. For example, in Fig. 5, the first cell counted from the left of a first cell string 31 is not aligned transversely with the first cell counted from the left of a second cell string 32; the first cell counted from the left of the first cell string 31 is located between the first cell counted from the left and the second cell counted from the left of the second cell string 32 in the longitudinal direction D1. The first cell counted from the left of the first cell string 31 and the first cell counted from the left of a third cell string 33 are aligned transversely; the first cell counted from the left of a fourth cell string 34 and the first cell counted from the left of the second cell string 32 are aligned transversely. This configuration enables the battery assembly 100 to have a compact internal structure, with as many cells 30 as possible arranged in a space of a specific volume.

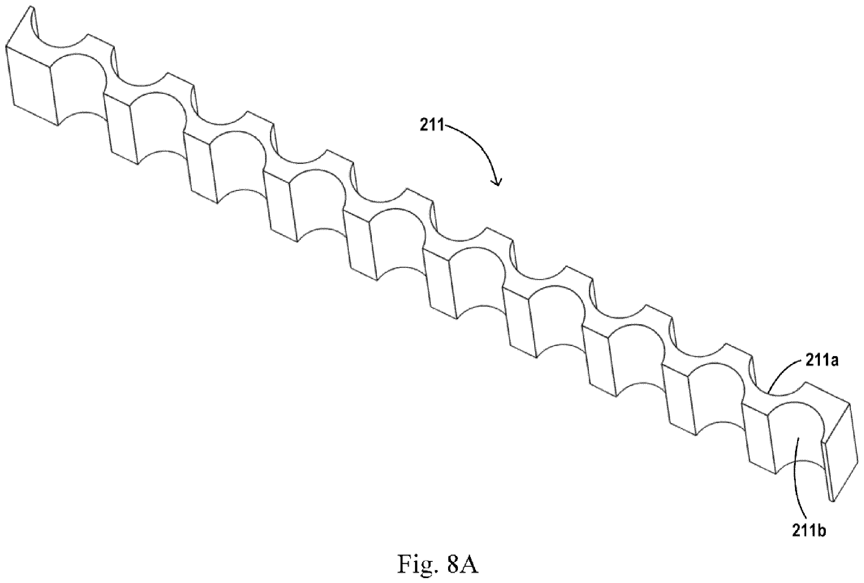

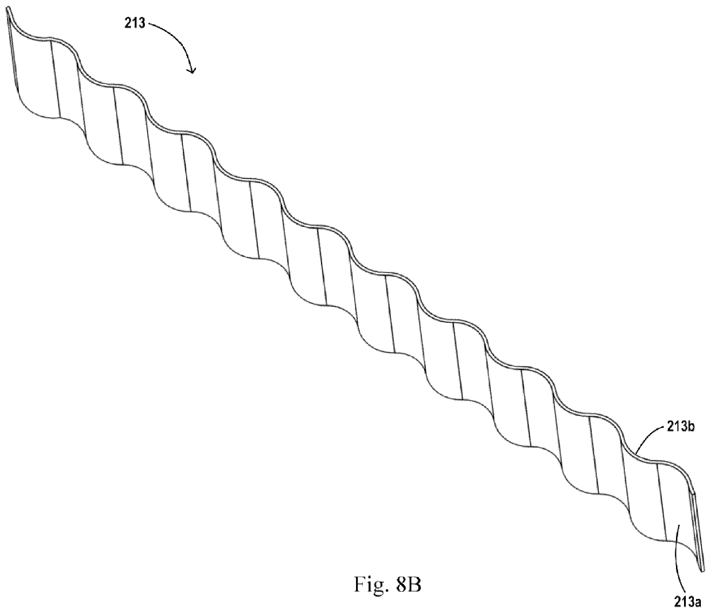

Adapting to this arrangement of cell strings, the spacer components 21 are constructed in a wave shape, i.e. the accommodating recesses on two transverse sides of each spacer component 21 are offset in the transverse direction. Taking an exemplary spacer component 211 shown in Figs. 7 and 8 as an example, the two transverse sides of the spacer component 211 are respectively provided with a first accommodating recess 211a and a second accommodating recess 211b; the first accommodating recess 211a and second accommodating recess 211b are for example respectively used to accommodate a pair of adjacent cell strings. The first accommodating recess 211a and second accommodating recess 211b of the spacer component 211 are offset in the transverse direction, such that the first accommodating recess 211a and second accommodating recess 211b of the spacer component 211 are staggered in the longitudinal direction D1.

Continuing to refer to Fig. 7, taking a pair of adjacent spacer components 211, 212 as an example, accommodating recesses belonging to the adjacent spacer components and corresponding to each other in the transverse direction (e.g. accommodating recess 211a and accommodating recess 212a) together define an accommodating cavity 20a which is approximately complete in the circumferential direction of the cell 30, in particular a cylindrical accommodating cavity 20a, and are thus able to fit the cylindrical cell 30 over a large area, in order to increase the heat conduction efficiency. Specifically, the first accommodating recess 211a of the spacer component 211 and the first accommodating recess 212a of the spacer component 212 together define a cylindrical accommodating cavity 20a.

Continuing to refer to Figs. 4 - 6, the heat dissipating means 20 further comprises two end components 22 similar to the spacer components 21, the two end components 22 being located at two transverse sides of all of the spacer components 21 so as to be arranged alongside the spacer components 21; the end components 22 extend in the longitudinal direction D1 and are fitted in a shape-adapted manner to the outside walls of the cells 30 which face them. The end component 22 and the spacer component 21 adjacent thereto can also together define accommodating cavities 20a that are approximately complete in the circumferential direction of the cells 30, and the end component 22 and the spacer component 21 adjacent thereto can together be used to accommodate one cell string.

In some embodiments, depending on cell size, there may be a gap 23 between the spacer component 21 and end component 22 which are adjacent to each other. Preferably, the spacer component 21 and end component 22 completely surround the periphery of the cell. The top and bottom retaining components 10 are connected to each other, for example by bolts, snap-fit connectors, etc. The heat dissipating means is clamped between the retaining components 10. Since the heat dissipating means has a certain degree of flexibility, the cells can be clamped in the battery support effectively.

The end component 22 and spacer component 21 are of the same material, both being made of a material with a thermal conductivity greater than that of air. In some embodiments, the end component 22 and spacer component 21 may for example be made of EPDM (ethylene propylene diene monomer rubber). It will be understood that another flexible material with good heat dissipating ability may also be selected. The flexibility of the material simultaneously provides shock resistance/cushioning ability for the cells. The retaining component 10 may be made of PC + ABS. To further improve the heat dissipation result, a metal plate 213 such as a copper plate may be integrally moulded on at least a portion of the spacer components 21 and the end components 22. For example, as shown in Fig. 5, the metal plate 213 extends in one piece in the longitudinal direction D1 within the spacer component 21; preferably, the metal plate 213 is disposed close to a transverse edge of the spacer component 21 in which it is situated, and is shape-adapted to the transverse edge. As can be seen from the individual schematic drawing of the metal plate 213 in the spacer component 21 shown in Fig. 8B, the metal plate 213 is also formed to be substantially wave-shaped. For example, the metal plate 213 has a recess 213a corresponding to the accommodating recess 211b, and a recess 213b corresponding to the accommodating recess 211a. As a result of this configuration, the face of the metal plate 213 that faces the cell 30 is also a curved face, and the area is also large, enabling an improvement in the heat dissipation efficiency of the metal plate 213.

In some embodiments, the end component 22 and the spacer component 21 may be formed of different materials. The end component 22 may have higher hardness than the spacer component 21, so as to provide better protection around the cell array. However, the end component 22 still has good heat dissipation ability, e.g. may be made of a mixture of polycarbonate and acrylonitrile-butadiene-styrene copolymer (PC + ABS).

In some embodiments, the height of the heat dissipating means 20 is more than half the height of the cell. For example, the heat dissipating means 20 may extend over nearly the entire height direction D2 of the cell 30. For example, a top surface 20b of the heat dissipating means 20 (see Fig. 4) may abut the top retaining component of the cell 30; a bottom surface 20c of the heat dissipating means 20 (see Fig. 4) may abut the bottom retaining component 10 of the cell 30. As a result of this configuration, each cell 30 is completely covered and surrounded by the retaining components and the heat dissipating means 20; this can ensure that the cells 30 and the heat dissipating means 20 have a sufficiently large heat exchange area, and can also increase the firmness of installation of the cells 30. In some embodiments, the top and bottom retaining components of the cells 30 are connected to each other, and the heat dissipating means 20 is clamped therebetween.

Referring to Fig. 8A, in some embodiments, the heat dissipating means may further have some preferred structures. For example, the spacer component 211 may be a rotationally symmetric structure (with the axis of rotational symmetry for example being located at a central position in the longitudinal direction of the spacer component and extending in the height direction). This configuration allows a mould for manufacturing the spacer component 211 to be simple and the production cost to be lower. For example, the accommodating recesses 211a, 211b are distributed uniformly on the spacer component 211 in the longitudinal direction D1; preferably, the spacing between the accommodating recesses is smaller than the diameter of the accommodating cavity 20a (see Fig. 7), and the thickness of any part of the spacer component 211 (said thickness being a dimension in a direction perpendicular to the height direction D2) is smaller than the diameter of the accommodating cavity 20a. This configuration enables the battery assembly to have a compact overall structure and occupy a smaller volume.

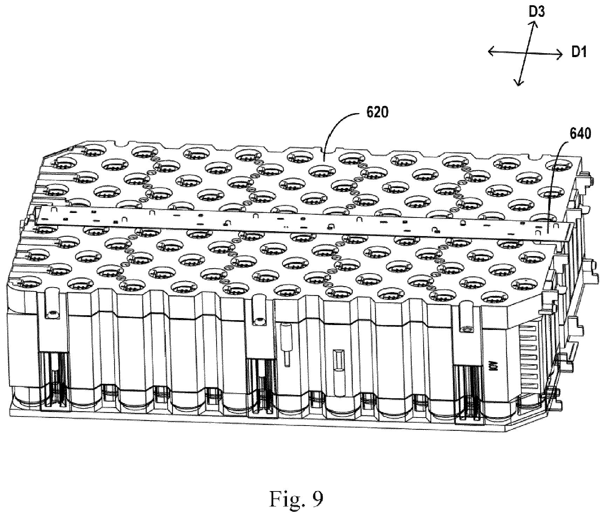

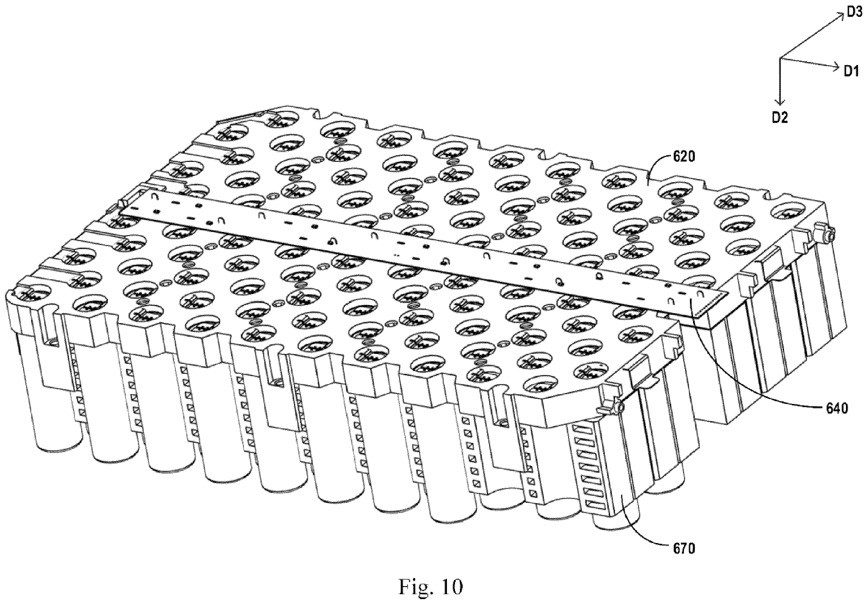

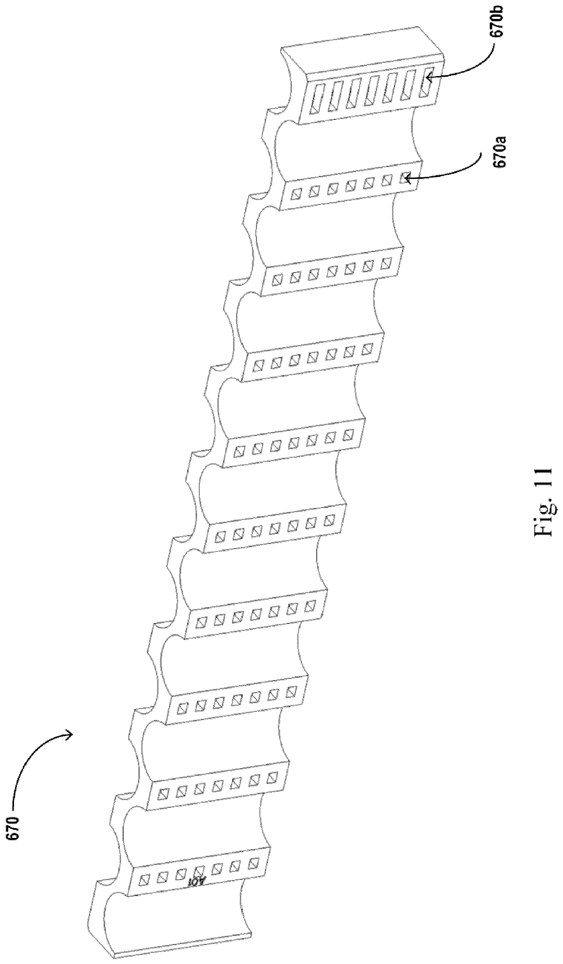

Figs. 9 - 11 are some other preferred embodiments according to the present invention. In the battery assembly of these preferred embodiments, the heat dissipating means may have some variant forms. For example, referring to Fig. 11, a heat dissipating means 670 is installed below a retaining component 620 in abutment therewith, and weight reduction holes may be provided in the spacer components and/or end components of the heat dissipating means 670. The weight reduction holes for example comprise rectangular openings 670b located at a longitudinal end of the spacer component and extending in the longitudinal direction D1, or square openings 670a located at positions nearer the centre in the longitudinal direction of the spacer component. Figs. 9 and 10 also show a circuit transmission plate 640 for collecting current.

In some embodiments of the present invention, the heat dissipating means is in direct contact with a housing of the battery assembly, such that the heat of the cells can be dissipated to the external environment more easily through the housing of the battery assembly. For example, the end components may abut the housing of the battery assembly.

The present invention further comprises a work machine, supplied with power by the battery assembly in the embodiments described above. The work machine is for example a gardening tool, in particular a lawnmower or a snow blower.

It must be explained that the abovementioned embodiments of the present invention may be combined and/or altered in various ways, and the results of combination and/or alteration should also be regarded as embodiments of the present invention.

In the present invention, the heat dissipating means is at least partially arranged between adjacent cells and fitted to the outer walls of the cells over as large an area as possible, being able to undergo heat exchange with the cells in the process of use of the battery assembly and thus promote heat dissipation from the cells, in order to maintain the efficiency of use and the service life of the battery assembly.

The above description of various embodiments of the present invention is provided to a person skilled in the art for descriptive purposes. It is not intended that the present invention be exclusively or limited to a single disclosed embodiment. As above, those skilled in the field of the above teaching will understand various alternatives and variants of the present invention. Thus, although some alternative embodiments have been specifically described, those skilled in the art will understand, or develop with relative ease, other embodiments. The present invention is intended to include all alternatives, modifications and variants of the present invention described here, as well as other embodiments which fall within the spirit and scope of the present invention described above.

## Claims

1. Battery support, for a battery assembly (100) having multiple cells (30) arranged in parallel axially, **characterized in that** the battery support comprises retaining components located at the top and bottom of the cells (30), and a heat dissipating means therebetween, the heat dissipating means (20) comprising multiple independent spacer components (21), the spacer component having multiple accommodating recesses on at least one side, the accommodating recess being partially shape-fitted to a circumferential sidewall of the cell, the spacer component being made of a flexible material with a thermal conductivity greater than that of air, the retaining component restricting movement of the cell in an axial direction of the cell, and the heat dissipating means restricting movement of the cell perpendicular to the axial direction of the cell.

2. Battery support according to Claim 1, **characterized in that** the spacer components are arranged abreast in such a way as to be separable from each other, and the accommodating recesses are positioned opposite each other between adjacent said spacer components to form an accommodating cavity (20a), the accommodating cavity being able to accommodate the cell in a shape-matched manner.

3. Battery support according to Claim 2, **characterized in that** accommodating recesses (21 1a, 211b) partially shape-adapted to the sidewall of the cell are provided on two sides in a transverse direction (D3) of each said spacer component, the accommodating recesses on the two sides in the transverse direction of each said spacer component being staggered in a longitudinal direction (D1).

4. Battery support according to Claim 3, **characterized in that** the accommodating cavity (20a) defined by adjacent spacer components is cylindrical.

5. Battery support according to any one of Claims 2-4, **characterized in that** the heat dissipating means further comprises an end component (22) located at an outer side in the transverse direction (D3) of all of the spacer components and arranged abreast of the spacer components, the end component having multiple accommodating recesses, the accommodating recesses of the end component facing the accommodating recesses of the adjacent spacer component to form accommodating cavities, which accommodate the cells in a partially shape-adapted manner.

6. Battery support according to Claim 5, **characterized in that** the spacer component (21) and the end component (22) are made of EPDM, and preferably, a metal plate (213) such as a copper plate is integrally moulded on at least a portion of the multiple spacer components.

7. Battery support according to Claim 6, **characterized in that** the metal plate extends in one piece in the longitudinal direction (D1) in the spacer component, and preferably, the metal plate is disposed close to the accommodating recesses and shape-adapted to the accommodating recesses.

8. Battery support according to any one of Claims 1 - 7, **characterized in that** the height of the heat dissipating means (20) is more than half the height of the cell, the heat dissipating means preferably extends over the entire height of the cell, and a weight reduction hole (670a, 670b) is optionally provided on the heat dissipating means.

9. Battery support according to any one of Claims 1 - 8, **characterized in that** the spacer component is a rotationally symmetric structure.

10. Battery support according to any one of Claims 1-9, **characterized in that** the accommodating recesses are distributed uniformly in the longitudinal direction (D1), and the spacing between adjacent accommodating recesses is smaller than the diameter of the accommodating cavity.

11. Battery support according to any one of Claims 1 - 10, **characterized in that** the thickness of any part of the spacer component is smaller than the diameter of the accommodating cavity.

12. Battery support according to any one of Claims 1 - 10, **characterized in that** the retaining components at the top and bottom are connected to each other, and the heat dissipating means is clamped therebetween.

13. Battery support according to any one of Claims 1 - 10, **characterized in that** the heat dissipating means is in direct contact with a housing of the battery assembly.

14. Battery assembly, **characterized by** comprising:
multiple cells (30, 650);
the battery support according to any one of Claims 1 - 13, the cells being accommodated in the accommodating cavities formed by the spacer components of the heat dissipating means.
